# EUROPÄISCHE PATENTSCHRIFT

(11) **EP 1 808 603 B1**
(45) Veröffentlichungstag und Bekanntmachung des Hinweises auf die Patenterteilung: **30.09.2009**
(21) Anmeldenummer: 06126155.8
(22) Anmeldetag: 14.12.2006
(51) Int. Cl.: F04D 29/16, F16J 15/44

(54) **Strömungsmaschine für ein Fluid mit einem radialen Dichtspalt**
Rotary machine for fluid with a radial seal clearance
Machine rotative pour fluide à jeu d'étanchéité radial

(30) Priorität: 12.01.2006 EP 06405010
(43) Veröffentlichungstag der Anmeldung: 18.07.2007
(73) Patentinhaber: SULZER PUMPEN AG, 8401 Winterthur (CH)
(72) Erfinder: Lienau, Wolfram, 8522 Häuslenen (CH); Meuter, Paul, 8472 Seuzach (CH)
(74) Vertreter: Sulzer Management AG

(56) Entgegenhaltungen:
- DE-B- 1 023 177
- US-A- 2 851 289
- US-A- 3 228 342
- US-A- 5 295 786
- US-A1- 5 961 281

## Beschreibung

Die Erfindung betrifft eine Strömungsmaschine für ein Fluid gemäss Oberbegriff von Anspruch 1.

In Strömungsmaschinen für Fluide sind zwischen dem Rotor und den Statorteilen häufig radiale Dichtspalte vorgesehen, die normalerweise eng ausgelegt werden, um die die Verlustströme klein zu halten. Falls sich Rotor und Statorteile in bestimmten Betriebszuständen, wie beispielsweise beim Anfahren der Strömungsmaschine, berühren, kann dies zu einer Abnützung der Statorteile und/oder des Rotors und zu einer unerwünschten Verbreiterung der Dichtspalte führen. Falls das Fluid Feststoffe enthält, kann dies ebenfalls zu einem Verschleiss in den engen Dichtspalten führen.

Um einer unerwünschten Verbreiterung der Dichtspalte entgegenzuwirken, werden deshalb in den Dichtspalten Schutzschichten und/oder selbsttragende Verschleissringe aus verschleissfesten Werkstoffen eingesetzt. Derartige Verschleissringe weisen zwar eine hohe Verschleissfestigkeit auf, sie sind jedoch wegen ihrer Verschleissfestigkeit nur in einfachen Formen herstellbar. Ein weiterer Nachteil ist der im Vergleich zu anderen Werkstoffen geringe Wärmeausdehnungskoeffizient und die geringe Elastizität derartiger Verschleissringe. Bei thermischen Anfahr-Transienten, wie sie z.B. bei der Förderung heisser Fluide auftreten, erwärmt sich das Laufrad wegen der Durchströmung und der geringeren Masse schneller als der in einem Statorteil eingesetzte Verschleissring. Dabei kann der enge Dichtspalt bei steilen Transienten unter ein zulässiges Mass schrumpfen oder gar überbrückte werden, was zu einer vorzeitigen Verbreiterung der Dichtspalte oder gar zu einer Beschädigung der Strömungsmaschine führten kann.

Dokument US 5 961 281 offenbart einen Turbolader mit einem Wandelement aus Kunststoff und die Dokumente US 5 295 786 des als nächstliegender stand der Technik betrachten wird, und US 2 851 289 beschreiben jeweils eine Spaltdichtung mit einem Verschleissring für eine Pumpe. Weiter is aus DE 10 23 177 eine Strömungsmaschine ohne Verschleissring bekannt.

Aufgabe der Erfindung ist es, eine Strömungsmaschine für ein Fluid zur Verfügung zu stellen, die einen radialen Dichtspalt zwischen Statorteilen und einem Rotor umfasst, und die sich für grössere thermische Anfahr-Transienten eignet, wie sie beispielsweise beim Anfahren von Kesselspeisepumpen auftreten können.

Diese Aufgabe wird erfindungsgemäss durch die in Anspruch 1 definierte Strömungsmaschine gelöst.

Die erfindungsgemässe Strömungsmaschine, die beispielsweise als Kreiselpumpe und insbesondere als Kesselspeisepumpe ausgeführt sein kann, umfasst einen radialen Dichtspalt zwischen Statorteilen und einem Rotor, wobei am Dichtspalt mindestens ein Verschleissring vorgesehen ist. In der erfindungsgemässen Strömungsmaschine ist der Verschleissring über ein elastisch verformbares Befestigungsteil an einem der Statorteile befestigt.
Das Befestigungsteil ist auf der einen Seite und/oder in einem axialen Endbereich und/oder in einer axialen Hälfte mit dem Statorteil verbunden, wobei auf dieser Seite beziehungsweise in diesem Endbereich beziehungsweise in dieser Hälfte ein radialer Spalt zwischen einer äusseren Mantelfläche des Verschleissringes und dem Befestigungsteil ausgebildet ist, und auf der anderen Seite, insbesondere in axialer Richtung anderen Seite, und/oder im gegenüberliegenden Endbereich und/oder in der anderen axialen Hälfte mit dem Verschleissring, wobei auf dieser Seite beziehungsweise in diesem Endbereich beziehungsweise in dieser Hälfte ein radialer Spalt zwischen einer äusseren Mantelfläche des Befestigungsteils und dem Statorteil ausgebildet ist. Vorteilhafterweise ist das Befestigungsteil rotationssymmetrisch ausgebildet und/oder am Umfang mit einer geschlossenen Oberfläche versehen. In einer vorteilhaften Ausführungsvariante weist das Befestigungsteil im Querschnitt die Form eines Biegebalkens auf.

In einer vorteilhaften Ausführungsform der Strömungsmaschine ist das Befestigungsteil als Einzelteil herstellbar. Vorteilhafterweise ist das Befestigungsteil mittels Schrumpfsitz und/oder Schweissverbindung und/oder Lötverbindung und/oder Schraubverbindung mit dem Statorteil verbunden.

In einer weiteren vorteilhaften Ausführungsform der Strömungsmaschine ist der Befestigungsteil mittels Schrumpfsitz mit dem Verschleissring verbunden, und/oder der Verschleissring mittels Schrauben gegen Verschieben auf dem Befestigungsteil gesichert.

In einer vorteilhaften Ausführungsvariante sind die axiale Länge des radialen Spaltes zwischen der äusseren Mantelfläche des Verschleissringes und dem Befestigungsteil und/oder die axiale Länge des radialen Spaltes zwischen der äusseren Mantelfläche des Befestigungsteils und dem Statorteil grösser als die halbe axiale Länge des Befestigungsteils.

In einer weiteren vorteilhaften Ausführungsvariante hat das Material des Verschleissringes einen Wärmeausdehnungskoeffizienten α von weniger als 10 x 10⁻⁶/°C, und in einer weiteren vorteilhaften Ausführungsvariante besteht der Verschleissring aus einem verschleissfesten Werkstoff, beispielsweise aus nitriergehärtetem Stahlguss, wie z.B. Werkstoffnummer 1.438, oder aus einem keramischen Werkstoff, beispielsweise aus Metalloxiden, Wolframkarbid oder Siliziumkarbid.

Die erfindungsgemässe Strömungsmaschine hat den Vorteil, dass dank dem elastisch verformbaren Befestigungsteil und den oben beschriebenen Spalten zwischen der äusseren Mantelfläche des Verschleissringes und dem Befestigungsteil und zwischen der äusseren Mantelfläche des Befestigungsteils und dem Statorteil der Verschleissring in radialer Richtung beweglich ist. Somit werden thermisch bedingte Änderungen des Verschleissringradius nicht durch die Statorteile eingeschränkt. Weiter von Vorteil ist, dass der Verschleissring in Folge des Wärmewiderstandes des Befestigungsteils thermisch von den Statorteilen entkoppelt ist. Dadurch kann sich der Verschleissring schneller an die Temperatur des durchströmenden Fluids anpassen, so dass Beschädigungen, die entstehen können, wenn der Dichtspalt zwischen Rotor und Verschleissring bei steilen Anfahr-Transienten unter ein zulässiges Mass schrumpft, vermieden werden können. Zusätzlich ist es möglich, den Grad der thermischen Entkopplung zwischen dem Verschleissring und den Statorteilen durch Formgebung und/oder Materialwahl des Befestigungsteils an die jeweilige Anwendung anzupassen.

Die obige Beschreibung von Ausführungsformen dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen:
- Fig. 1: einen Längsschnitt durch eine herkömmliche Strömungsmaschine für Fluide,
- Fig. 2: eine Detailansicht eines Ausführungsbeispiels einer Strömungsmaschine gemäss vorliegender Erfindung, und
- Fig. 3: eine Detailansicht eines zweiten Ausführungsbeispiels einer Strömungsmaschine gemäss vorliegender Erfindung.

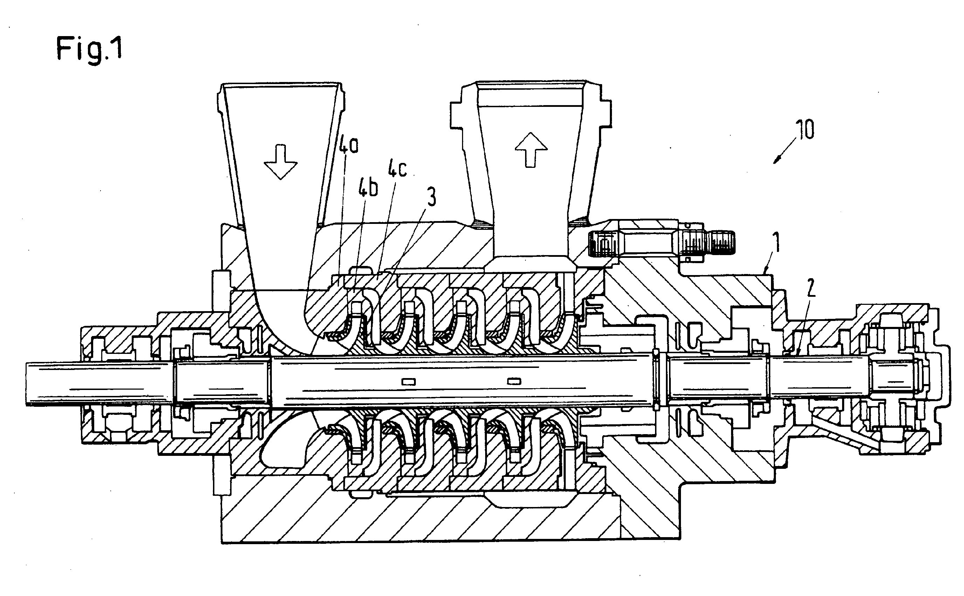

Fig. 1 zeigt einen Längsschnitt durch eine herkömmliche Strömungsmaschine für Fluide, die beispielsweise als mehrstufige Kesselspeisepumpe für heisse Fluide ausgebildet sein kann. In einem Gehäuse 1 der Strömungsmaschine 10 sind Statorteile 4a, b, c und ein Rotor 3 mit einer Welle 2 vorgesehen, die im Gehäuse drehbar gelagert ist. Der Rotor 3 kann, wie Fig. 1 gezeigt, mehrere Laufräder umfassen, beispielsweise ein Sauglaufrad am Eingang der Strömungsmaschine und mehrere nachfolgende Laufräder.

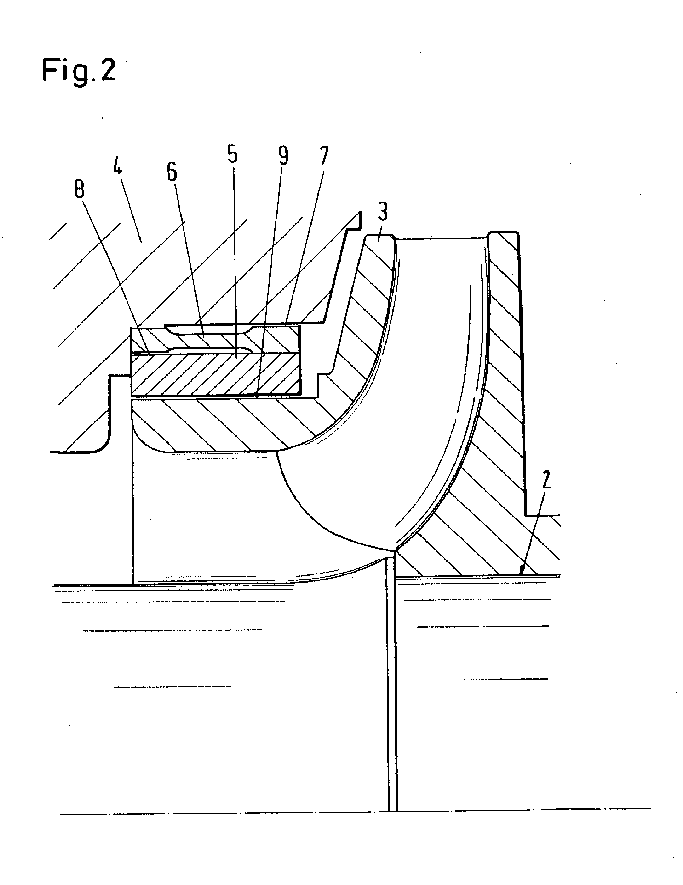

Fig. 2 zeigt eine Detailansicht eines Ausführungsbeispiels einer Strömungsmaschine gemäss vorliegender Erfindung. In der gezeigten Detailansicht bezeichnet das Bezugszeichen 3 einen Rotor, der auf einer Welle 2 angeordnet ist, wobei in Fig. 2 jeweils nur der obere Teil gezeigt ist und der bezüglich der Wellenachse rotationssymmetrische Teil weggelassen wurde. Der Rotor 3 kann, wie gezeigt, als Laufrad, beispielsweise als geschlossenes Laufrad und insbesondere als geschlossenes Sauglaufrad für eine Pumpe ausgebildet sein. Weiter umfasst die Strömungsmaschine einen Statorteil 4, der zweckmässigerweise so ausgebildet und angeordnet ist, dass zwischen dem Statorteil 4 und der Welle 2 ein Strömungskanal gebildet wird, der in einen Strömungskanal im Laufrad 3 mündet. Zwischen dem Laufrad 3 und dem Statorteil 4 ist ein radialer Dichtspalt 9 vorgesehen, der zweckmässigerweise eng gewählt wird, um den Verluststrom klein zu halten. Im gezeigten Ausführungsbeispiel ist am Dichtspalt 9 ein am Statorteil 4 befestigter Verschleissring 5 vorgesehen, um der Abnützung und einer damit verbundenen Verbreiterung des Dichtspaltes entgegenzuwirken. Bei Bedarf kann auf der Mantelfläche des Rotors, die zusammen mit dem Verschleissring 5 den Dichtspalt bildet, eine abriebfeste Schutzschicht vorgesehen werden oder, falls das zu fördernde Fluid z.B. abrasive Feststoffe enthält, ein Verschleissring, der am Rotor befestigt ist. In einer vorteilhaften Ausführungsvariante besteht der am Statorteil 4 befestigte Verschleissring 5 und fallweise der am Rotor befestigte Verschleissring aus einem verschleissfesten Werkstoff, z.B. nitriergehärtetem Stahlguss oder einem keramischen Werkstoff wie beispielsweise Metalloxiden, Wolframkarbid oder Siliziumkarbid, und in einer weiteren vorteilhaften Ausführungsvariante hat das Material der Verschleissringe einen Wärmeausdehnungskoeffizienten α von weniger als 10 x 10⁻⁶/°C.

Der Verschleissring 5 ist im gezeigten Ausführungsbeispiel über ein elastisch verformbares Befestigungsteil 6 am Statorteil 4 befestigt. Das Befestigungsteil 6 ist auf der einen Seite und/oder in einem axialen Endbereich und/oder in einer axialen Hälfte mit dem Statorteil 4 verbunden, wobei auf dieser Seite beziehungsweise in diesem Endbereich beziehungsweise in dieser Hälfte ein radialer Spalt 8 zwischen einer äusseren Mantelfläche des Verschleissringes und dem Befestigungsteil ausgebildet ist, und auf der in axialer Richtung anderen Seite und/oder im gegenüberliegenden Endbereich und/oder in der anderen axialen Hälfte mit dem Verschleissring 5, wobei auf dieser Seite beziehungsweise in diesem Endbereich beziehungsweise in dieser Hälfte ein radialer Spalt 7 zwischen einer äusseren Mantelfläche des Befestigungsteils und dem Statorteil ausgebildet ist. Das Befestigungsteil 6, das zweckmässigerweise rotationssymmetrisch ausgebildet ist, kann beispielsweise mittels Schrumpfsitz mit dem Verschleissring verbunden sein.

Vorteilhafterweise wird der Verschleissring mittels Schrauben gegen Verschieben auf dem Befestigungsteil gesichert. In einer vorteilhaften Ausführungsvariante sind die Länge des radialen Spaltes 8 zwischen der äusseren Mantelfläche des Verschleissringes und dem Befestigungsteil und/oder die Länge des radialen Spaltes 7 zwischen der äusseren Mantelfläche des Befestigungsteils und dem Statorteil grösser als die halbe Länge des Befestigungsteils 6.

Die Eigenschaften des Befestigungsteils 6, wie beispielsweise Steifigkeit und Wärmewiderstand, können durch die Formgebung, z.B. durch Wahl von Länge, Wandstärke und Durchmesser, und bei Bedarf durch die Materialwahl des Befestigungsteils an die jeweilige Anwendung angepasst werden. In einer vorteilhaften Ausführungsvariante weist das Befestigungsteil im Querschnitt die Form eines Biegebalkens auf.

In einer vorteilhaften Ausführungsform der Strömungsmaschine ist das Befestigungsteil 6 als Einzelteil herstellbar. Das Befestigungsteil kann beispielsweise mittels Schrumpfsitz, Schweissverbindung, Lötverbindung, Schraubverbindung oder einer Kombination dieser Verbindungen mit dem Statorteil 4 verbunden sein.

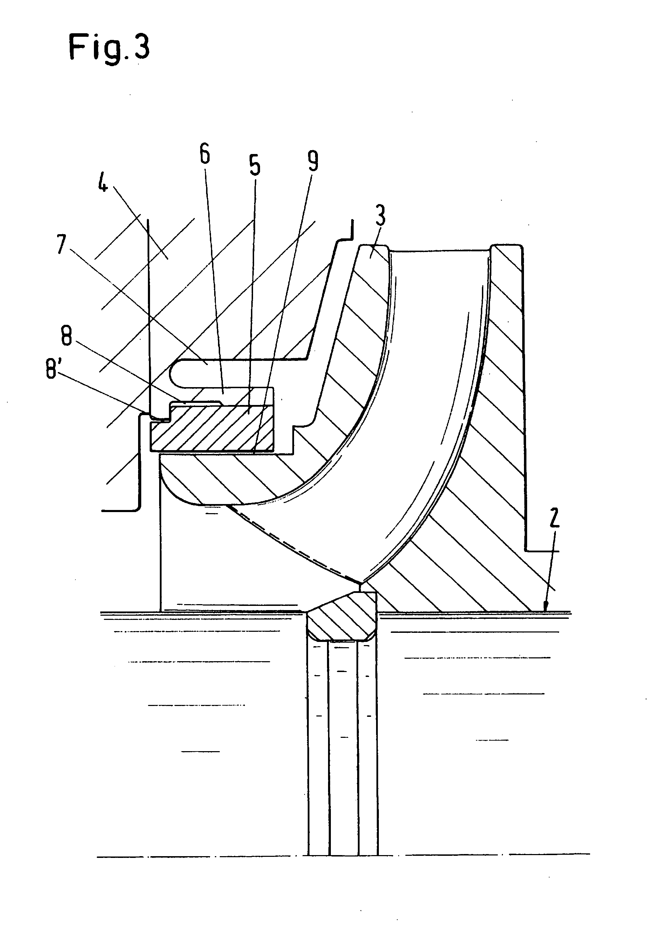

Fig. 3 zeigt eine Detailansicht eines zweiten Ausführungsbeispiels einer Strömungsmaschine gemäss vorliegender Erfindung. Die Merkmale und Eigenschaften des zweiten Ausführungsbeispiels sind mit Ausnahme der Ausgestaltung des Befestigungsteils gleich wie diejenigen des ersten Ausführungsbeispiels, so dass im Folgenden lediglich auf die Unterschiede in der Ausgestaltung des Befestigungsteiles eingegangen wird. Im zweiten Ausführungsbeispiel umfasst die Strömungsmaschine ein elastisch verformbares Befestigungsteil 6, welches als Teil des Statorteils 4 ausgebildet ist, und welches dazu dient, einen Verschleissring 5 an einem Statorteil 4 zu befestigen. Damit entfällt eine gesonderte Befestigung des Befestigungsteils am Statorteil. Auf der einen Seite des Befestigungsteiles 6, wo dieses mit dem restlichen Statorteil 4 zusammenhängt, ist ein radialer Spalt 8, 8' zwischen einer äusseren Mantelfläche des Verschleissringes und dem Befestigungsteil ausgebildet. Dieser Spalt kann, wie in Fig. 3 gezeigt, zwei Teile 8 und 8' umfassen, die über einen axialen Spaltabschnitt miteinander verbunden sind. Auf der in axialer Richtung anderen Seite des Befestigungsteiles 6 ist dieses mit dem Verschleissring 5 verbunden, wobei auf dieser Seite ein radialer Spalt 7 zwischen einer äusseren Mantelfläche des Befestigungsteils und dem Statorteil ausgebildet ist. Aus herstellungstechnischen Gründen kann dieser Spalt auch zu einer Nut verbreitert werden.

Das Befestigungsteil 6, das zweckmässigerweise rotationssymmetrisch ausgebildet ist, kann beispielsweise mittels Schrumpfsitz mit dem Verschleissring verbunden sein. Vorteilhafterweise wird der Verschleissring mittels Schrauben gegen Verschieben auf dem Befestigungsteil 6 gesichert. In einer vorteilhaften Ausführungsvariante sind die Gesamtlänge des radialen Spaltes 8, 8' zwischen der äusseren Mantelfläche des Verschleissringes und dem Befestigungsteil und/oder die Länge des radialen Spaltes beziehungsweise der radialen Nut 7 zwischen der äusseren Mantelfläche des Befestigungsteils und dem restlichen Statorteil grösser als die halbe Länge des Befestigungsteils 6.

Die erfindungsgemässe Strömungsmaschine hat den Vorteil, dass sich ein Verschleissring, der an einem Dichtspalt zwischen einem Statorteil und einem Rotor vorgesehen ist, in Folge des Wärmewiderstandes und der Elastizität des Befestigungsteils schneller an die Temperatur des durchströmenden Fluids anpassen kann, so dass ein Unterschreiten der zulässigen Abmessungen des Dichtspaltes bei steilen Anfahr-Transienten vermieden werden kann. Die erfindungsgemässe Strömungsmaschine ermöglicht insbesondere ein schnelleres Anfahren von Strömungsmaschine für heisse Fluide, wie beispielsweise Kesselspeisepumpen.

## Patentansprüche

1. Strömungsmaschine für ein Fluid mit einem radialen Dichtspalt (9) zwischen Statorteilen (4, 4a, b, c) und einem Rotor (3), wobei am Dichtspalt (9) mindestens ein Verschleissring (5) vorgesehen ist, wobei der Rotor als geschlossenes Laufrad ausgebildet ist, **dadurch gekennzeichnet, dass** der Verschleissring (5) über ein elastisch verformbares Befestigungsteil (6) an einem der Statorteile (4, 4a, b, c) befestigt ist, dass das Befestigungsteil (6) auf der einen Seite mit dem Statorteil (4, 4a, b, c) verbunden ist, wobei auf dieser Seite ein radialer Spalt (8, 8') zwischen einer äusseren Mantelfläche des Verschleissringes (5) und dem Befestigungsteil ausgebildet ist, und dass das Befestigungsteil (6) auf der in axialer Richtung anderen Seite mit dem Verschleissring (5) verbunden ist, wobei auf dieser Seite ein radialer Spalt (7) zwischen einer äusseren Mantelfläche des Befestigungsteils und dem Statorteil ausgebildet ist.

2. Strömungsmaschine nach Anspruch 1, wobei das Befestigungsteil (6) als Einzelteil herstellbare ist.

3. Strömungsmaschine nach einem der Ansprüche 1 oder 2, wobei der Befestigungsteil (6) rotationssymmetrisch ausgebildet ist und/oder im Querschnitt die Form eines Biegebalkens hat.

4. Strömungsmaschine nach einem der Ansprüche 1 bis 3, wobei der Befestigungsteil (6) mittels Schrumpfsitz und/oder Schweissverbindung und/oder Lötverbindung und/oder Schraubverbindung mit dem Statorteil (4, 4a, b, c) verbunden ist.

5. Strömungsmaschine nach einem der Ansprüche 1 bis 4, wobei der Befestigungsteil (6) mittels Schrumpfsitz mit dem Verschleissring (5) verbunden ist, und/oder wobei der Verschleissring mittels Schrauben gegen Verschieben auf dem Befestigungsteil gesichert ist.

6. Strömungsmaschine nach einem der Ansprüche 1 bis 5, wobei die axiale Länge des radialen Spaltes (8, 8') zwischen der äusseren Mantelfläche des Verschleissringes (5) und dem Befestigungsteil (6) und/oder die axiale Länge des radialen Spaltes (7) zwischen der äusseren Mantelfläche des Befestigungsteils (6) und dem Statorteil (4, 4a, b, c) grösser sind als die halbe axiale Länge des Befestigungsteils.

7. Strömungsmaschine nach einem der Ansprüche 1 bis 6, wobei das Material des Verschleissringes (5) einen Wärmeausdehnungskoeffizienten α von weniger als 10 x 10⁻⁶/°C aufweist.

8. Strömungsmaschine nach einem der Ansprüche 1 bis 7, wobei der Verschleissring (5) aus einem verschleissfesten Werkstoff und/oder keramischen Werkstoff besteht, beispielsweise aus Metalloxiden, Wolframkarbid oder Siliziumkarbid.

## Claims

1. A flow machine for a fluid with a radial sealing gap (9) between stator parts (4, 4a, b, c) and a rotor (3), with at least one wear ring (5) being provided at the sealing gap (9), with the rotor being formed as a closed impeller, **characterised in that** the wear ring (5) is fastened to one of the stator parts (4, 4a, b, c) via an elastically deformable fastening part (6), **in that** the fastening part (6) is connected to the stator part (4, 4a, b, c) on the one side and, on this side, a radial gap (8, 8') is formed between an outer jacket surface of the wear ring (5) and the fastening part and **in that** the fastening part (6) is connected on the other side in the axial direction to the wear ring (5), with a radial gap (7) being formed on this side between an outer jacket surface of the fastening part and the stator part.

2. A flow machine in accordance with claim 1, wherein the fastening part (6) can be manufactured as a single part.

3. A flow machine in accordance with one of the claims 1 or 2, wherein the fastening part (6) is made rotationally symmetrical and/or has the shape of a bending beam in cross-section.

4. A flow machine in accordance with any one of the claims 1 to 3, wherein the fastening part (6) is connected with the stator part (4, 4a, b, c) by means of a shrink fit and/or a welded connection and/or a brazed connection and/or a screw connection.

5. A flow machine in accordance with any one of the claims 1 to 4, wherein the fastening part (6) is connected to the wear ring (5) by means of a shrink fit and/or wherein the wear ring is secured against displacement on the fastening part by means of screws.

6. A flow machine in accordance with any one of the claims 1 to 5, wherein the length of the radial gap (8, 8') between the outer jacket surface of the wear ring (5) and the fastening part (6) and/or the length of the radial gap (7) between the outer jacket surface of the fastening part (6) and the stator part (4, 4a, b, c) are larger than half the axial length of the fastening part.

7. A flow machine in accordance with any one of the claims 1 to 6, wherein the material of the wear ring (5) has a thermal expansion coefficient α of less than 10 x 10⁻⁶/°C.

8. A flow machine in accordance with any one of the claims 1 to 7, wherein the wear ring (5) comprises a wear-resistant material and/or a ceramic material, for example of metal oxides, tungsten carbide or silicon carbide.

## Revendications

1. Machine rotative pour un fluide à jeu d'étanchéité radial (9) entre des parties de stator (4, 4a, b, c) et un rotor (3), où est prévue au jeu d'étanchéité (9) au moins une bague d'usure (5), où le rotor est réalisé comme roue de roulement fermée, **caractérisée en ce que** la bague d'usure (5) est fixée par une partie de fixation élastiquement déformable (6) à l'une des parties de stator (4, 4a, b, c), **en ce que** la partie de fixation (6) est reliée sur un côté à la partie de stator (4, 4a, b, c), où est réalisé sur ce côté un jeu radial (8, 8') entre une face d'enveloppe externe de la bague d'usure (5) et la partie de fixation, et **en ce que** la partie de fixation (6) est reliée à l'autre côté dans la direction axiale à la bague d'usure (5), où est réalisé sur ce côté un jeu radial (7) entre une face d'enveloppe externe de la partie de fixation et la partie de stator.

2. Machine rotative selon la revendication 1, où la partie de fixation (6) peut être fabriquée comme pièce détachée.

3. Machine rotative selon l'une des revendications 1 ou 2, où la partie de fixation (6) est réalisée d'une manière symétrique en rotation et/ou présente en section transversale la forme d'une poutre de flexion.

4. Machine rotative selon l'une des revendications 1 à 3, où la partie de fixation est reliée par ajustage serré par retrait et/ou soudage et/ou brasage et/ou vissage à la partie de stator (4, 4a, b, c).

5. Machine rotative selon l'une des revendications 1 à 4, où la partie de fixation (6) est reliée par ajustage serré par retrait à la bague d'usure (5) et/ou où la bague d'usure est assurée au moyen de vis à l'encontre d'un déplacement sur la partie de fixation.

6. Machine rotative selon l'une des revendications 1 à 5, où la longueur axiale du jeu radial (8, 8') entre la face d'enveloppe externe de la bague d'usure (5) et la partie de fixation (6) et/ou la longueur axiale du jeu radial (7) entre la face d'enveloppe externe de la partie de fixation (6) et la partie de stator (4, 4a, b et c) sont plus grandes que la moitié de la longueur axiale de la partie de fixation.

7. Machine rotative selon l'une des revendications 1 à 6, où le matériau de la bague d'usure (5) présente un coefficient de dilatation thermique α inférieur à 10 x 10⁻⁶/°C _{.}

8. Machine rotative selon l'une des revendications 1 à 7, où la bague d'usure (5) est constituée d'un matériau résistant à l'usure et/ou d'un matériau céramique, par exemple en oxydes métalliques, carbure de tungstène ou carbure de silicium.
